# EUROPÄISCHE PATENTSCHRIFT

(11) **EP 2 082 932 B1**
(45) Veröffentlichungstag und Bekanntmachung des Hinweises auf die Patenterteilung: **26.09.2012**
(21) Anmeldenummer: 09000487.0
(22) Anmeldetag: 15.01.2009
(51) Int. Cl.: B60T 7/12, B60T 13/74, B60T 13/68

(54) **Feststellbremssystem für ein Fahrzeug und Verfahren zum Betreiben eines Feststellbremssystems**
Handbrake for a vehicle and method for operating same
Système de frein de service pour un véhicule et procédé de fonctionnement d'un système de frein de service

(30) Priorität: 25.01.2008 DE 102008006265
(43) Veröffentlichungstag der Anmeldung: 29.07.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- DE-A1-102004 055 960
- DE-A1-102005 043 607

## Beschreibung

Die Erfindung betrifft ein Feststellbremssystem für ein Fahrzeug, das zumindest teilweise in ein Getriebe des Fahrzeugs integriert ist und ein Steuergerät umfasst.

Die Erfindung betrifft weiterhin ein Verfahren zum Betreiben eines Bremssystems für ein Fahrzeug, umfassend ein Feststellbremssystem und ein EBS-System, wobei das Feststellbremssystem zumindest teilweise in ein Getriebe integriert ist und ein Steuergerät umfasst.

Zur Sicherung gegen ein unbeabsichtigtes Wegrollen eines abgestellten Fahrzeugs verfügen Fahrzeuge unterschiedlichster Bauart, die auf der Straße beziehungsweise der Schiene einsetzbar sind, üblicherweise über eine Feststellbremse. Diese ist in geeigneter Weise dazu ausgelegt, zumindest einen Teil der Fahrzeugräder zu blockieren, die während des Fahrbetriebs des Fahrzeugs eine Rollbewegung erlauben.

Nachteilig bei derartigen Konstruktionen ist, dass an jedem zu bremsenden Fahrzeugrad eine Bremswirkung ausübende Vorrichtung vorzusehen ist, beispielsweise ein Federspeicherbremszylinder, so dass der bauliche Aufwand für die Feststellbremse sehr groß ist. Wird die Bremswirkung ausübende Vorrichtung an dem Fahrzeugrad gleichzeitig auch von einer Betriebsbremse des Fahrzeugs verwendet, wie im Falle eines Federspeicherbremszylinders, so ist zusätzlich ein Schutz vor einer Doppelbelastung vorzusehen, die bei gleichzeitiger Betätigung der Feststellbremse und der Betriebsbremse auftreten kann.

Im Zusammenhang mit der DE 10 2004 055 960 A1 ist bereits bekannt, die Feststellbremse in ein Getriebe des Fahrzeugs zu integrieren. Die dort beschriebene Feststellbremse ist jedoch hinsichtlich der Bremswirkung für Fahrzeuge mit mehreren nicht angetriebenen Fahrzeugachsen, zum Beispiel einer Zugmaschine mit drei Fahrzeugachsen, wobei nur eine Fahrzeugachse angetrieben ist, oder einem Fahrzeug mit einem nicht angetriebenen Anhänger, ungeeignet, da nur die angetriebenen Fahrzeugräder gebremst werden.

Die DE 10 2005 043 607 A1 beschreibt ein Verfahren zum Steuern einer elektrischen Feststellbremse eines Nutzfahrzeugs, wobei eine von einem EBS-System erzeugte Betriebsbremskraft die von der Feststellbremse erzeugte Feststellbremskraft unterstützt, wenn letztere zum Halten des Fahrzeugs nicht ausreicht.

Der Erfindung liegt die Aufgabe zugrunde, eine einfach bauende Feststellbremse bereitzustellen, die eine ausreichende Hilfsbremsunterstützung bei unterschiedlichen Achskonfigurationen bereitstellt.

Diese Aufgabe wird durch die Merkmale der unabhängigen Ansprüche gelöst.

Vorteilhafte Ausführungsformen der Erfindung ergeben sich aus den abhängigen Ansprüchen.

Die Erfindung baut auf dem gattungsgemäßen Feststellbremssystem dadurch auf, dass das Feststellbremssystem eine Handsteuereinheit umfasst, die einen Anschluss für ein EBS-System aufweist. Über den Anschluss für das EBS-System kann auch eine Bremswirkung an nicht angetriebenen Fahrzeugachsen erreicht werden, um die Hilfsbremsunterstützung der Feststellbremse zu erhöhen.

Nützlicherweise kann vorgesehen sein, dass das Steuergerät mit einem Anhängersteuermodul gekoppelt ist. Durch das mit Ansteuern der Feststellbremse eines Anhängers wird die erreichbare Bremswirkung der Feststellbremse des Fahrzeugs erhöht.

Vorteilhafterweise ist vorgesehen, dass das Steuergerät geeignet ist, das Getriebe des Fahrzeugs zu steuern. Durch die Integration der Feststellbremse in das Getriebe des Fahrzeugs ergibt sich eine räumliche Nähe zwischen den Komponenten der Feststellbremse und dem Getriebe, die zur Einsparung eines Steuergerätes, beispielsweise eines Getriebesteuergerätes, genutzt werden kann.

Dabei kann nützlich sein, dass die Handsteuereinheit geeignet ist, einen Fahrerwunsch zum stufbaren Betätigen des Feststellbremssystems an das Steuergerät zu übertragen. Durch die Detektionen des Fahrerwunsches hinsichtlich einer stufbaren Betätigung des Feststellbremssystems wird erst eine stufbare Bremswirkung des Feststellbremssystems sinnvoll einsetzbar.

Weiterhin kann nützlich sein, dass die Handsteuereinheit mit einem Getriebevorwahlgeber zusammengefasst ist. Die Zusammenfassung der Handsteuereinheit mit einem Getriebevorwahlgeber ermöglicht eine ergonomische Bedienung von Getriebe und Feststellbremse des Fahrzeugs.

Insbesondere kann vorgesehen sein, dass der Fahrerwunsch zum stufbaren Betätigen des Feststellbremssystems durch die Handsteuereinheit über eine Betätigungszeit detektierbar ist. Die Detektion des Fahrerwunsches zum stufbaren Betätigen des Feststellbremssystems über eine Betätigungszeit ermöglicht eine einfache Bedienbarkeit des Feststellbremssystems. Das Bedienelement dessen Betätigungszeit detektiert wird, kann beispielsweise ein Schalter, ein Hebel oder eine Schaltwippe sein.

Zusätzlich oder alternativ kann vorgesehen sein, dass der Fahrerwunsch zum Betätigen des Feststellbremssystems durch die Handsteuereinheit über einen Betätigungsweg detektierbar ist. Auch über die Detektion eines Betätigungsweges, beispielsweise eines Hebels, ist das Feststellbremssystem intuitiv und einfach bedienbar.

Nützlicherweise ist vorgesehen, dass das Feststellbremssystem geeignet ist, ein von der Handsteuereinheit detektiertes Signal an ein EBS-Steuergerät weiterzuleiten. Das Weiterleiten eines von der Handsteuereinheit empfangenen Signals an das EBS-Steuergerät ermöglicht insbesondere einen Back-up-Betrieb, falls der normalerweise verwendete Betriebswertbremsgeber der Betriebsbremse durch einen Defekt ausfällt.

Es kann nützlich sein, dass das Steuergerät geeignet ist, eine Testfunktion für das Feststellbremssystem bereitzustellen. Durch die Testfunktion ist feststellbar, ob das Feststellbremssystem ausreichend Bremswirkung bereitstellt, um das abgestellte Fahrzeug vor einem unbeabsichtigten Wegrollen zu sichern, wenn ein eventuell vorhandener Anhänger ungebremst ist.

Vorteilhafterweise kann vorgesehen sein, dass das Steuergerät geeignet ist, eine Kupplung des Fahrzeugs zu steuern. Die Kupplung des Fahrzeugs ist üblicherweise zwischen einem Antriebsmotor und dem Getriebe des Fahrzeugs, direkt vor dem Getriebe angeordnet. Diese räumliche Nähe kann, zumal das Betätigen der Kupplung oftmals mit einem Betätigen des Getriebes korreliert, idealerweise zur Einsparung eines weiteren Steuergerätes, zum Beispiel einem die Kupplung steuernden Steuergerät, ausgenutzt werden. Weiterhin kann durch das Schließen der Kupplung die Bremswirkung des Feststellbremssystems erhöht werden.

Weiterhin kann vorgesehen sein, dass das Steuergerät geeignet ist, ein Differential des Fahrzeugs zu steuern.
Durch das Sperren zumindest eines Differentials des Fahrzeugs wird die Drehbewegung von zumindest zwei Fahrzeugrädern synchronisiert und somit eine Bremswirkung auf die gekoppelten Fahrzeugräder gleichmäßig verteilt. Durch das Sperren eines Querdifferentials lassen sich die Fahrzeugräder einer einzelnen Achse miteinander Koppeln während die Sperrung eines Längsdifferentials die Drehbewegung verschiedener Achsen starr miteinander koppelt. Das Sperren von zumindest einem Differential im Zusammenhang mit dem Schließen der Feststellbremse des Fahrzeugs verteilt daher die von einer einzigen Vorrichtung aufgebrachte Bremswirkung gleichmäßig auf die über die gesperrten Differentiale gekoppelten Fahrzeugräder. Diese Maßnahme ist besonders bei einem abgestellten Fahrzeug sinnvoll.

Es kann nützlich sein, dass das Feststellbremssystem einen Akku zur Stromversorgung bei einem Stromausfall umfasst. Der Akku erlaubt bei einem Stromausfall zumindest einen eingeschränkten Betrieb des Feststellbremssystems, der beispielsweise ein einmaliges Öffnen oder Schließen der feststellbremse umfassen kann. Besitzt der Akku eine höhere Kapazität, kann darüber hinaus vorgesehen sein, einen eingeschränkten Betrieb der Kupplung und des Getriebes zu ermöglichen. Der Akku versorgt dabei Magnetventile beziehungsweise elektrische Stellmotoren, über die eine mechanische Betätigung des Feststellbremssystems, des Getriebes und der Kupplung realisiert sind. Zusammen mit dem Betrieb der Feststellbremse kann auch der Akku geeignet sein, die Sperrung/Entsperrung des Differentials zu ermöglichen.

Das gattungsgemäße Verfahren wird dadurch weiterentwickelt, dass ein von einer zum Feststellbremssystems gehörende Handsteuereinheit ermittelter Fahrerwunsch an ein EBS-Steuergerät des EBS-Systems weitergeleitet wird, und dass das EBS-System daraufhin das Feststellbremssystem mit zusätzlicher Bremswirkung durch das Schließen einer Betriebsbremse unterstützt, um eine ausreichende Hilfsbremswirkung zu erreichen. Die Weiterleitung des Fahrerwunsches kann insbesondere über einen eigenen Anschluss des EBS-Steuergeräts an die Handsteuereinheit erfolgen.

Auf diese Weise werden die Vorteile und Besonderheiten des erfindungsgemäßen Feststellbremssystems auch im Rahmen eines Verfahrens umgesetzt.

Dies gilt auch für die nachfolgend angegebenen besonders bevorzugten Ausführungsformen des erfindungsgemäßen Verfahrens.

Dieses wird nützlicherweise dadurch weitergebildet, dass das Steuergerät ein Anhängersteuermodul ansteuert.

Nützlicherweise ist vorgesehen, dass das Steuergerät das Getriebe des Fahrzeugs steuert.

Vorteilhafterweise ist vorgesehen, dass ein Fahrerwunsch zum stufbaren Betätigen des Feststellbremssystems über eine Betätigungszeit der Handsteuereinheit erfasst wird.

Es kann nützlich sein, dass ein Fahrerwunsch zum stufbaren Betätigen des Feststellbremssystems über einen Betätigungsweg der Handsteuereinheit-erfasst wird.

Darüberhinaus kann vorgesehen sein, dass das Steuergerät eine Testfunktion des Feststellbremssystems durchführt.

Zusätzlich kann vorgesehen sein, dass das Steuergerät eine Kupplung des Fahrzeugs steuert.

Darüberhinaus ist es nützlich, dass das Steuergerät ein Differential des Fahrzeugs steuert.

Nützlicherweise ist vorgesehen, dass eine Stromversorgung des Feststellbremssystems bei einem Stromausfall über einen Akku erfolgt.

In diesem Zusammenhang ist vorgesehen, dass eine Stromversorgung zumindest eines der folgenden Systeme bei einem Stromausfall über den Akku erfolgt: Getriebe, Kupplung und Differential.

Es kann nützlich sein, dass das Betätigen des Getriebes während einer Betätigung des Feststellbremssystems unterbunden wird, wenn eine Motordrehzahldifferenz vor und nach dem Betätigen des Getriebes größer als eine vorgebbare Schwellendifferenz wird. Auf diese Weise ist eine kontinuierliche Bremswirkung des Feststellbremssystems erzielbar, die insbesondere nicht durch das mit dem Betätigen des Getriebes verbundene Öffnen und dem damit zusammenhängenden kurzfristigen Verlust der Motorbremswirkung negativ beeinflusst wird.

Voteilhafterweise ist vorgesehen, dass ein Öffnen der Kupplung während einer Betätigung des Feststellbremssystems nur unterhalb eines Schwellenwertes einer Motordrehzahl eines Antriebsmotors möglich wird. Auch diese Maßnahme verhindert eine sprunghafte Änderung der Bremswirkung des Feststellbremssystems.

Zusätzlich ist vorgesehen, dass das Betätigen des Feststellbremssystems während eines Regelzyklus eines ESP-Systems oder ABS-Systems unterbrochen wird. Das Unterbrechen der Betätigung des Feststellbremssystems verbessert den Regelzyklus des ESP- oder ABS-Systems.

Weiterhin ist vorgesehen, dass das Feststellbremssystem bei einer Hilfsbremsunterstützung automatisch bei einer Entlüftung öffnet. Auf diese Weise wird die Bedienfreundlichkeit während eines Notbetriebs erhöht.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Fahrzeugs mit einem erfindungsgemäßen Feststellbremssystem;
- Figur 2: eine weitere Darstellung eines Fahrzeugs mit einem erfindungsgemäßen Feststellbremssystem;
- Figur 3: eine Darstellung einer Magnetventileinrichtung und
- Figur 4: eine schematische Darstellung eines erfindungsgemäßen Feststellbremssystems.

In den folgenden Zeichnungen bezeichnen gleiche Bezugszeichen gleiche oder gleichartige Teile.

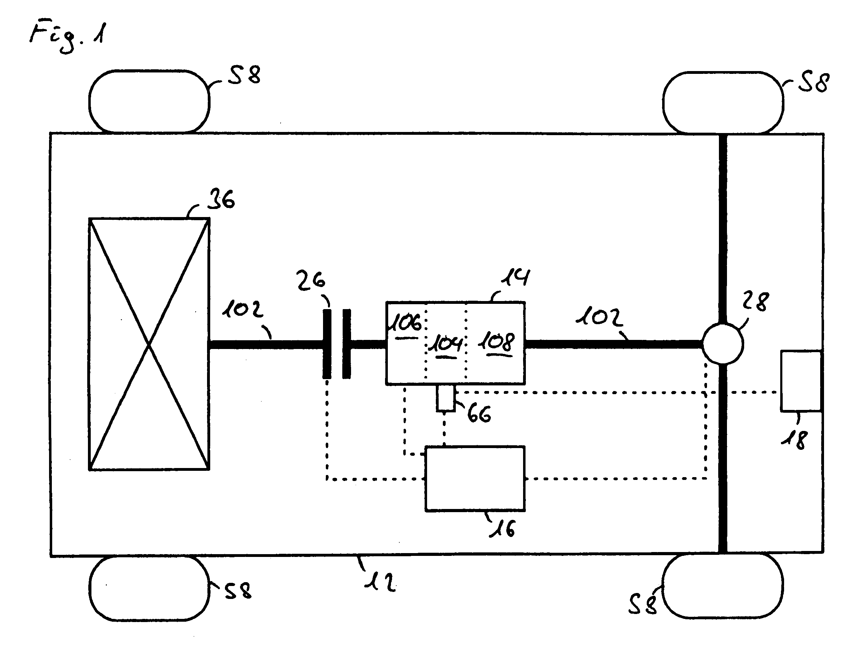

Figur 1 zeigt eine schematische Darstellung eines Fahrzeugs mit einem erfindungsgemäßen Feststellbremssystem. Ein dargestelltes Fahrzeug 12 mit Fahrzeugrädern 58 wird von einem Antriebsmotor 36 über einen Triebstrang 102 angetrieben, wobei die von dem Antriebsmotor 36 aufgebrachte Kraft über ein Differential 28 auf die hinteren Fahrzeugräder 58 des Fahrzeugs 12 übertragen wird. In dem Triebstrang 102 sind weiterhin eine Kupplung 26 und ein Getriebe 14 angeordnet, wobei das Getriebe 14 eine Getriebeeingangsstufe 106, eine Getriebeausgangsstufe 108 und eine zwischen der Getriebeeingangsstufe 106 und der Getriebeausgangsstufe 108 angeordnete Feststellbremse 104 umfasst. Ein Steuergerät 16 ist über Leitungen mit der Kupplung 26, dem Differential, 28 und einem Anhängersteuermodul 18 und dem Getriebe 14 gekoppelt, wobei eine separate Kopplung des Steuergeräts 16 über eine Magnetventileinrichtung 66 mit der Feststellbremse 104 und dem Anhängersteuermodul 18 vorgesehen ist. Das Steuergerät 16 umfasst einen Getriebesteuerteil, einen Kupplungssteuerteil, einen Differentialsteuerteil und einen Feststellbremssteuerteil. Die Magnetventileinrichtung 66 ist so ausgelegt, dass bei Verlust des Vorsteuersignals, das pneumatisch, elektrisch oder hydraulisch sein kann, das Ausgangssignal zur Steuerung der Feststellbremse 104 erhalten bleibt. Es kann beispielsweise Drehrasten, Schieberasten oder Reibungselementen wie O-Ringen, die gleichzeitig eine Dichtfunktion wahrnehmen, umfassen. Eine magnetische Selbsthaltung zur Lagefixierung und selbsthaltende Spindeln sind ebenfalls denkbar. Das Steuergerät 16 kann die Kupplung 26 öffnen und schließen, das Differential 28 sperren und entsperren, das Getriebe 14 schalten, die Feststellbremse 104 öffnen und schließen und das Anhängersteuermodul 18 ansteuern. Die Feststellbremse 104 kann daher, wenn sie von dem Steuergerät 16 geschlossen wird und das Steuergerät 16 gleichzeitig das Differential 28 sperrt, die beiden hinteren Fahrzeugräder 58 gleichmäßig bremsen. Aufgrund der sicherheitskritischen Funktionen, die das Steuergerät 16 wahrnimmt, ist eine redundante Stromversorgung des Steuergeräts 16 sinnvoll.

Die Medienversorgung der Magnetventileinrichtung 66 beziehungsweise der Feststellbremse 104 kann insbesondere redundant durch zwei separate nicht dargestellte Medienversorgungsleitungen realisiert werden, wobei vorteilhafterweise die Medienversorgung des Getriebes 14 und der Feststellbremse 104 über eine gemeinsame Medienversorgung realisiert sind. Das sich relativ zu dem Gehäuse des Getriebes 14 drehende Element wird durch Reibung mit einem in der Feststellbremse 104 angeordneten Bremsbelag abgebremst, wobei die entstehenden Kräfte über das feststehende Gehäuse des Getriebes 14 aufgenommen werden. Das abzubremsende sich bewegende Element ist vorzugsweise eine Scheibe oder ein Rad welches drehfest mit der Antriebswelle verbunden ist. Die Feststellbremse 104 muss lediglich so positioniert sein, dass sie den Bremsbelag gegen das abzubremsende Teil pressen kann. Die Feststellbremse 104 ist außerdem so gestaltet, dass sie bei einer Hilfsbremsunterstützung automatisch bei einer Entlüftung öffnet. Um die geforderte Verzögerung zu erhalten, ist das sich bewegende Element vorzugsweise zwischen der Getriebeeingangsstufe 106 und der Getriebeausgangsstufe 108 angeordnet. Bei einem hydraulischen oder pneumatischen Feststellbremssystem wird das automatische Öffnen bei einer Entlüftung dadurch erreicht, dass es einen Aktuator gibt, zum Beispiel einen Zylinder, welcher durch eine Feder rückgestellt wird. Weiterhin ist zumindest ein zugehöriges Vorsteuerventil bistabil aufgebaut. Dieser Zylinderfedereffekt wird bei einem Elektromotor durch ein zusätzliches elastisches zuspannendes Element, zum Beispiel eine Feder oder einen Gummiblock erreicht, welcher in serieller Wirkrichtung zur Motorachse angeordnet ist. Das Steuergerät 16 hat einen Anschluss an einen Fahrzeugbus, über den es mit weiteren Steuergeräten Informationen bezüglich des Fahrzeugzustandes austauschen kann, zum Beispiel einem EBS-Steuergerät und einer Motorsteuerung. Weiterhin umfasst das Steuergerät 16 einen Wake-Up-Schaltkreis und einen Schreib-LeseSpeicher zum Speichern von Statusinformationen, die beispielsweise im Rahmen einer späteren Fahrzeugdiagnose verwendet werden können. Die Magnetventileinrichtung 66 ermöglicht bei einer ECPB-Regelung im Falle einer Hilfsbremsunterstützung ein Abbremsen des durchdrehenden Fahrzeugrades und damit eine Stabilisierung des Fahrzeugs durch Einschränkung des Differentialausgleichvermögens. Das Anhängersteuermodul 18 wird von dem Steuergerät 16 angesteuert und übernimmt die Zugabstimmung bei Teilbremsungen im Falle der Betriebsbremsunterstützung bei einem EBS-Teilausfall, falls das Fahrzeug ein Fahrzeugzug, das heißt ein Zugfahrzeug mit einem Anhänger, ist. Um die Schaltelastizität der Anordnung gering zu halten, das heißt hohe Schaltgeschwindigkeiten und Schaltgenauigkeiten zu ermöglichen, ist die Magnetventileinrichtung 66 vorzugsweise in der Nähe der Feststellbremse 104 in oder an dem Getriebe 14 angeordnet. Die Integration der Feststellbremse 104 in das Getriebe 14 ermöglicht die Einsparung von Druckleitungen zu den einzelnen Fahrzeugrädern 58, die bremsbar sein sollen. Weiterhin können einfache Bremszylinder anstelle der üblichen Federspeicherbremszylinder verwendet werden. Diese Feststellbremse 104 ist als Motorbremse beziehungsweise Dauerbremse einsetzbar und kann zusätzlich zu der Betriebsbremse des Fahrzeugs 12 eine Bremswirkung entfalten. Um die Haltbarkeit der Bremsbeläge zu erhöhen, sollten diese als Nassläufer ausgelegt sein.

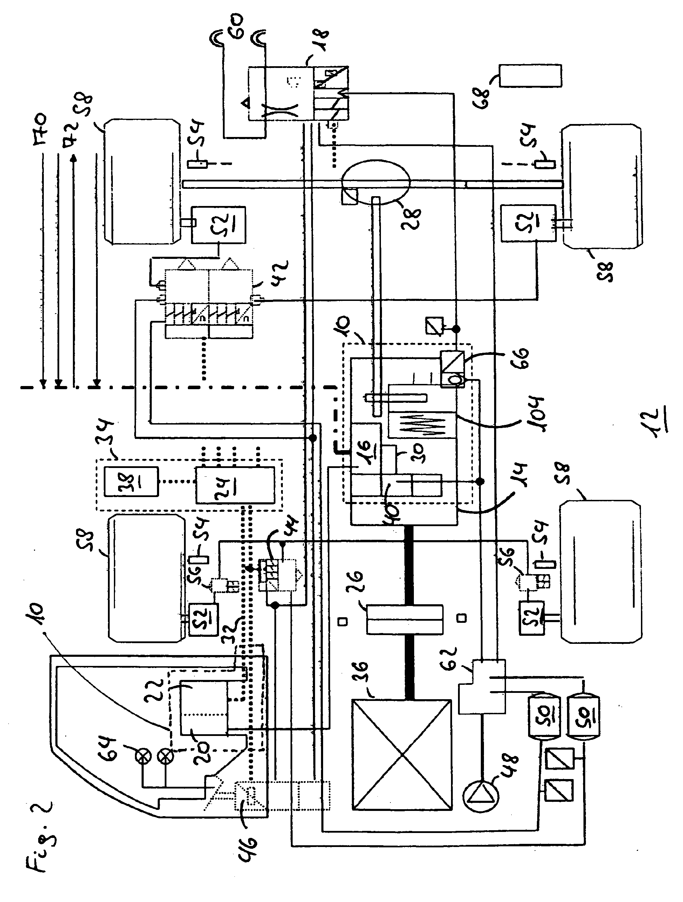

Figur 2 zeigt eine weitere Darstellung eines Fahrzeugs mit einem erfindungsgemäßen Feststellbremssystem. Das in Figur 2 dargestellte Fahrzeug 12 ist in weiten Teilen detaillierter aufgebaut als das in Figur 1 dargestellte Fahrzeug. Die Versorgung mit Druckluft wird über einen Kompressor 48 sichergestellt, wobei die bereitgestellte Druckluft in einer Druckluftaufbereitungsanlage 62 getrocknet und gereinigt wird, um anschließend in geeigneter Weise an die einzelnen Verbraucher vereilt zu werden. Zu den druckluftbetriebenen Verbrauchern gehören insbesondere die Betriebsbremskreise, die Druckluftbehälter 50, an den Fahrzeugrädern 58 angeordnete Bremszylinder 52 elektropneumatische Module 42, 44 sowie einen Bremswertgeber 46 der Betriebsbremse in Form eines Fußpedals umfassen. Zur Realisierung einer ABS-Funktionalität sind weiterhin ABS-Modulatoren 56 und Raddrehzahlsensoren 54 vorgesehen. Ist in dem Fahrzeug 12 ein EBS-System 34 mit einem EBS-Steuergerät 24 vorhanden, so ist in dieses üblicherweise ein ABS-System und ein ESP-System integriert. Zu diesem Zweck umfasst das EBS-System 34 einen ESP-Sensor 38. Die Betätigung der Betriebsbremse kann über ein Bremslicht 68 dem nachfolgenden Verkehr signalisiert werden. Das Anhängersteuermodul 18 verfügt über einen Anhängeranschluss 60, über den die Betriebs- und Feststellbremse eines nicht dargestellten Anhängers steuerbar ist. Zu diesem Zweck werden Steuerdrücke der Betriebsbremse und der Feststellbremse beziehungsweise, falls das Fahrzeug 12 und der Anhänger über ein vollelektronisches Bremssystem verfügen, Steuerströme über den Anhängeranschluss 60 an den Anhänger übertragen. Um im Falle eines Ausfalles des Bremswertgebers 46 der Betriebsbremse das Fahrzeug 12 abbremsen zu können, ist ein Anschluss 32 vorgesehen, über den eine Handsteuereinheit 20, die mit einem Getriebevonwahlgeber 22 zusammengefasst ist, mit dem EBS-Steuergerät 24 verbunden ist. Die Verbindung zwischen der Handsteuereinrichtung 20 und dem EBS-Steuergerät 24 beziehungsweise dem Steuergerät 16 kann redundant ausgelegt sein. Durch ein entsprechendes Betätigen der Handsteuereinheit 20 ist somit eine Hilfsremsunterstützung möglich. Durch den Anschluss 32 wird auch eine Übertragung eines Fahrerwunsches bezüglich einer Betätigung der Feststellbremse 104 als Signal an das Anhängersteuermodul 18 möglich. Eine Verbindung zwischen dem Steuergerät 16 und dem Anhängersteuermodul kann dann entfallen. Weiterhin ermöglicht die Handsteuereinrichtung 20 zumindest ein Aufwecken der für ein Schließen der Feststellbremse notwendigen Bestandteile des Steuergeräts 16 und/oder des EBS-Steuergeräts 24. In und an dem Getriebe 14 sind wesentliche Komponenten eines Feststellbremssystems 10 angeordnet. Insbesondere sind Getriebesteller 40, die von dem Steuergerät 16 steuerbar sind und über die die einzelnen Gänge des Getriebes 14 schaltbar sind dargestellt. Weiterhin ist in dem Getriebe 14 ein Akku 30 angeordnet, der zumindest einen eingeschränkten Betrieb der Feststellbremse 104 nach einem Stromausfall sichert. Insbesondere wird dann über den Akku 30 ein einmaliges Öffnen beziehungsweise Schließen der Feststellbremse 104 ermöglicht. Wenn die Kapazität des Akkus 30 ausreichend groß dimensioniert ist, ist es möglich, weiterhin die Getriebesteller 40 mit Strom zu versorgen und somit die Funktion des Getriebes 14 aufrechtzuerhalten. Der Akku 30 kann ebenfalls zur Stromversorgung der Kupplung 26 verwendet werden. Steht das Fahrzeug 12 und wird zusätzlich eine Zündung des Fahrzeugs ausgeschaltet, so kann der Akku verwendet werden, um die Feststellbremse zu schließen, da in diesem Fall davon ausgegangen werden kann, dass das Fahrzeug abgestellt werden soll. Weiterhin kann dann das Differential 28 gesperrt, und die Kupplung 26 geschlossen werden, um die Bremswirkung der Feststellbremse 104 zu erhöhen. Das Steuergerät 16 kann über einen Anschluss an einen Fahrzeugbus, zum Beispiel den CAN-Bus, eingehende Signale 70 empfangen beziehungsweise selbst Signale 72 senden, die beispielsweise hinsichtlich einer Interaktion mit dem EBS-System 34 notwendig sind. So kann sich beispielsweise die Fahrzeugstabilität erhöhen, wenn die Feststellbremse 104 von dem Steuergerät 16 während eines Regelzyklus des in das EBS-System 34 integrierten ABS- beziehungsweise EBS-Systems geöffnet wird. Weiterhin sind in dem Fahrzeug 12 ein Tachograph 64 und weitere Ausgabemittel angeordnet, über die eine eventuelle Fehlermeldung ausgebbar ist. Aufgrund des Differentials 28 zwischen dem Getriebe 14 und den Fahrzeugrädern 58 kann eine Überwachung der Raddrehzahlen beim Betätigen der Feststellbremse 104 sinnvoll sein, wobei im Falle durchdrehender Räder 58 eine Einschränkung des Differentialausgleichs und ein unterstützendes Einbremsen durch das EBS-System 34 vorgesehen sein kann.

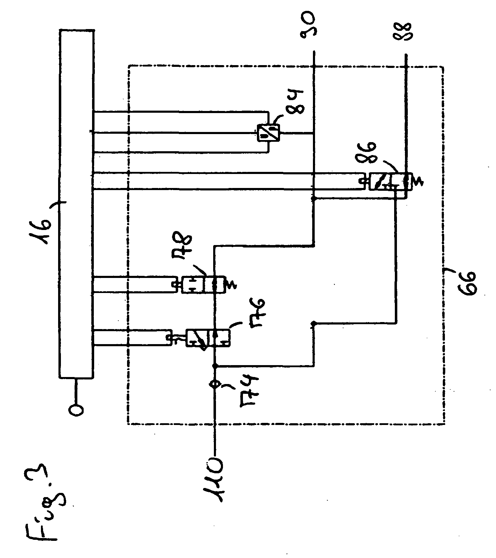

Figur 3 zeigt eine Darstellung einer Magnetventileinrichtung. Die dargestellte Magnetventileinrichtung 66 wird von dem Steuergerät 16 angesteuert und verfügt als Eingang über einen Versorgungsdruckanschluss 110 und als Ausgänge einen Anschluss 88 für ein Anhängersteuermodul und einen Anschluss 90 für eine Feststellbremse. Ausgehend von dem Versorgungsdruckanschluss 110 verzweigt die dargestellte Druckleitung stromabwärts eines Rückschlagventils 74. Zunächst besteht eine Kopplung mit einem bistabilen 3/2-Wegeventil 76, welches pulsweitenmoduliert ansteuerbar ist, um eine stufbare Feststellbremswirkung zu realisieren. Stromabwärts des bistabilen 3/2-Wegeventils ist ein 2/2-Wegeventil 78 vor dem Anschluss 90 der Feststellbremse angeordnet. Optional kann stromabwärts des 2/2-Wegeventils 78 ein Drucksensor 84 vorgesehen sein. Ein Abzweig stromabwärts des 2/2-Wegeventils 78 ist mit einem 3/2-Wegeventil 86 gekoppelt, wobei ein weiterer Eingang dieses 3/2-Wegeventils 86 mit dem Versorgungsdruckanschluss 110 gekoppelt ist. Der dritte Anschluss des 3/2-Wegeventils 86 mit dem Anschluss 88 des Anhängersteuermoduls gekoppelt. Das 3/2-Wegeventils 86 ist zur Realisierung einer Testfunktion der Feststellbremse vorgesehen. Durch Beaufschlagung des Anschlusses 88 mit Druck kann die Feststellbremse eines Anhängers geöffnet werden, weshalb die Feststellbremse des Anhängers durch das 3/2-Wegeventil 86 unabhängig von der Feststellbremse des Zugfahrzeugs geöffnet werden kann. Auf diese Weise kann getestet werden, ob die Bremswirkung der Feststellbremse ohne eine unterstützende Wirkung durch einen Anhänger ausreichend ist, das gesamte Fahrzeug zu halten.

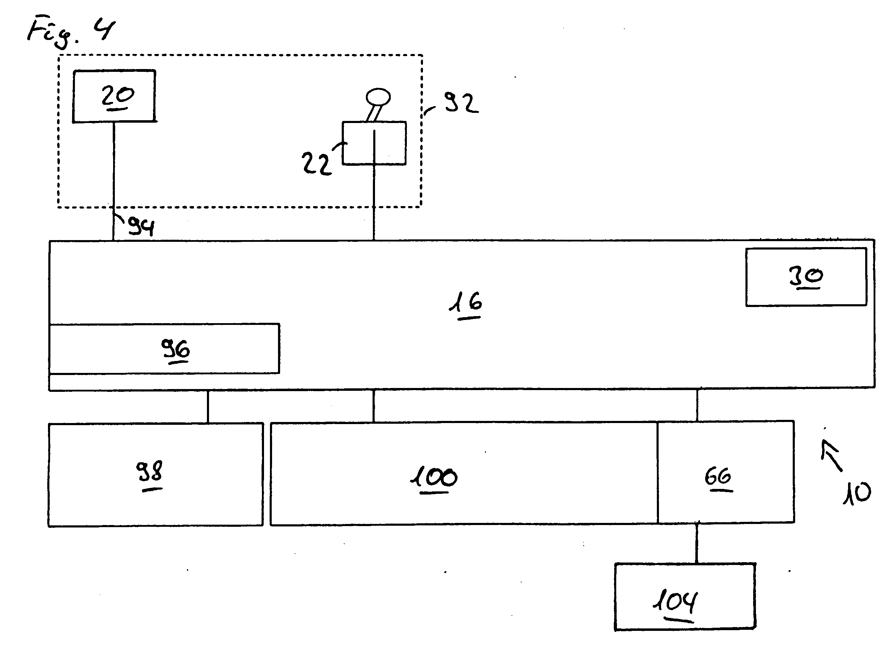

Figur 4 zeigt eine schematische Darstellung eines erfindungsgemäßen Feststellbremssystems. Kernstück des Feststellbremssystems 10 ist das Steuergerät 16 mit dem Akku 30 und einer Kupplungssteuerung 96. Über die Kupplungssteuerung 96 kann das Steuergerät 16 die Kupplung 26 des Fahrzeugs Öffnen und Schließen. Mit dem Steuergerät 16 ist eine kombinierte Eingabevorrichtung 92 gekoppelt, die die Handsteuereinheit 20 und den Getriebevorwahlgeber 22 umfasst. Die Kopplung erfolgt über eine Signalleitung 94, wobei die Signalübertragung wahlweise digital, analog oder gemischt erfolgen kann und das Signal ein Proportionalsignal sein kann. Die Handsteuereinheit 20 kann beispielsweise als einfacher Schaltknopf in den Kopf des Getriebevorwahlgebers 22 integriert sein, um die kombinierte Eingabevorrichtung 92 zu bilden. Das Steuergerät 16 ist weiterhin mit einem Sensormodul 98 gekoppelt, über das das Steuergerät 16 Fahrzeugzustandsdaten, zum Beispiel Fehlermeldungen, Druckwerte und Schaltzustände von Ventileinrichtungen erfassen kann. Ein Magnetventilmodul 100 dient der Steuerung der Kupplung, des Getriebes und des Differentials, während die Magnetventileinrichtung 66 für die Steuerung der Feststellbremse 104 vorgesehen ist.

Die in der vorstehenden Beschreibung, in den Zeichnungen sowie in den Ansprüchen offenbarten Merkmale der Erfindung können sowohl einzeln als auch in beliebiger Kombination, innerhalb des von das Ansprüchen definierten Umfangs für die Verwirklichung der Erfindung wesentlich sein.

### Bezugszeichenliste

- 10: Feststellbremssystem
- 12: Fahrzeug
- 14: Getriebe
- 16: Steuergerät
- 18: Anhängersteuermodul
- 20: Handsteuereinheit
- 22: getriebevorwahlgeber
- 24: EBS-Steuergerät
- 26: Kupplung
- 28: Differential
- 30: Akku
- 32: Anschluss
- 34: EBS-System
- 36: Antriebsmotor
- 38: ESP-Sensor
- 40: Getriebesteller
- 42: elektropneumatisches Modul
- 44: elektropneumatisches Modul
- 46: Bremswertgeber Betriebsbremse
- 48: Kompressor
- 50: Druckluftbehälter
- 52: Bremszylinder
- 54: Drehzahlsensor
- 56: ABS-Modulator
- 58: Fahrzeugrad
- 60: Anhängeranschluss
- 62: Druckluftaufbereitungsanlage
- 64: Tachograph
- 66: Magnetventileinrichtung
- 68: Bremslicht
- 70: eingehendes Signal
- 72: ausgehendes Signal
- 74: Rückschlagventil
- 76: bistabiles 3/2-Wegeventil
- 78: 2/2-Wegeventil
- 84: Drucksensor
- 86: 3/2-Wegeventil
- 88: Anschluss Anhängersteuermodul
- 90: Anschluss Feststellbremse
- 92: kombinierte Eingabevorrichtung
- 94: Signalleitung
- 96: Kupplungssteuerung
- 98: Sensormodul
- 100: Magnetventilmodul
- 102: Triebstrang
- 104: Feststellbremse
- 106: Getriebeeingangsstufe
- 108: Getriebeausgangsstufe
- 110: Versorgungsdruckanschluss

## Patentansprüche

1. Feststellbremssystem (10) für ein Fahrzeug (12), das zumindest teilweise in ein Getriebe (14) des Fahrzeugs (12) integriert ist und ein Steuergerät (16) umfasst, **dadurch gekennzeichnet, dass** das Feststellbremssystem (10) eine Handsteuereinheit (20) umfasst, die einen Anschluss (32) für ein EBS-System (34) aufweist.

2. Feststellbremssystem (10) nach Anspruch 1, **dadurch gekennzeichnet, dass** das Steuergerät (16) mit einem Anhängersteuermodul (18) gekoppelt ist.

3. Feststellbremssystem (10) nach Anspruch 1 oder 2, **dadurch gekennzeichnet, dass** das Steuergerät (16) geeignet ist, das Getriebe (14) des Fahrzeugs (12) zu steuern.

4. Feststellbremssystem (10) nach einem der vorhergehenden Ansprüche, **dadurch gekennzeichnet, dass** die Handsteuereinheit (20) geeignet ist, einen Fahrerwunsch zum stufbaren Betätigen des Feststellbremssystems (10) an das Steuergerät (16) zu übertragen.

5. Feststellbremssystem (10) nach Anspruch 4, **dadurch gekennzeichnet, dass** die Handsteuereinheit (20) mit einem Getriebevorwahlgeber (22) zusammengefassst ist.

6. Feststellbremssystem (10) nach Anspruch 4 oder 5, **dadurch gekennzeichnet, dass** der Fahrerwunsch zum stufbaren Betätigen des Feststellbremssystems (10) durch die Handsteuereinheit (20) über eine Betätigungszeit detektierbar ist.

7. Feststellbremssystem (10) nach einem der Ansprüche 4 bis 6, **dadurch gekennzeichnet, dass** der Fahrerwunsch zum Betätigen des Feststellbremssystems (10) durch die Handsteuereinheit (20) über einen Betätigungsweg detektierbar ist.

8. Feststellbremssystem (10) nach einem der vorhergehenden Ansprüche, **dadurch gekennzeichnet, dass** das Feststellbremssystem (10) geeignet ist, ein von der Handsteuereinheit (20) detektiertes Signal an ein EBS-Steuergerät (24) weiterzuleiten.

9. Feststellbremssystem (10) nach einem der vorhergehenden Ansprüche, **dadurch gekennzeichnet, dass** das Steuergerät (16) geeignet ist, eine Testfunktion für das Feststellbremssystem (10) bereitzustellen.

10. Feststellbremssystem (10) nach einem der vorhergehenden Ansprüche, **dadurch gekennzeichnet, dass** das Steuergerät (16) geeignet ist, eine Kupplung (26) des Fahrzeugs (12) zu steuern.

11. Feststellbremssystem (10) nach einem der vorhergehenden Ansprüche, **dadurch gekennzeichnet, dass** das Steuergerät (16) geeignet ist, ein Differential (28) des Fahrzeugs (12) zu steuern.

12. Feststellbremssystem (10) nach einem der vorhergehenden Ansprüche, **dadurch gekennzeichnet, dass** das Feststellbremssystem (10) einen Akku (30) zur Stromversorgung bei einem Stromausfall umfasst.

13. Fahrzeug (12) mit einem Feststellbremssystem (10) nach einem der vorhergehenden Ansprüche.

14. Verfahren zum Betreiben eines Bremssystems für ein Fahrzeug (12), umfassend ein Feststellbremssystem (10) und ein EBS-System (34), wobei das Feststellbremssystem (10) zumindest teilweise in ein Getriebe (14) integriert ist und ein Steuergerät (16) umfasst, **dadurch gekennzeichnet,**
- **dass** ein von einer zum Feststellbremssystems gehörende Handsteuereinheit (20) ermittelter Fahrerwunsch an ein EBS-Steuergerät (24) des EBS-Systems (34) weitergeleitet wird, und
- **dass** das EBS-System (34) daraufhin das Feststellbremssystem (10) mit zusätzlicher Bremswirkung durch das Schließen einer Betriebsbremse unterstützt, um eine ausreichende Hilfsbremswirkung zu erreichen.

15. Verfahren nach Anspruch 14, **dadurch gekennzeichnet, dass** das Steuergerät (16) ein Anhängersteuermodul (18) ansteuert.

16. Verfahren nach Anspruch 14 oder 15, **dadurch gekennzeichnet, dass** das Steuergerät (16) das Getriebe (14) des Fahrzeugs (12) steuert.

17. Verfahren nach einem der Ansprüche 14 bis 16, **dadurch gekennzeichnet, dass** ein Fahrerwunsch zum stufbaren Betätigen des Feststellbremssystems (10) über eine Betätigungszeit der Handsteuereinheit (20) erfasst wird.

18. Verfahren nach einem der Ansprüche 14 bis 17, **dadurch gekennzeichnet, dass** ein Fahrerwunsch zum stufbaren Betätigen des Feststellbremssystems (10) über einen Betätigungsweg der Handsteuereinheit (20) erfasst wird.

19. Verfahren nach einem der Ansprüche 14 bis 18, **dadurch gekennzeichnet, dass** das Steuergerät (16) eine Testfunktion des Feststellbremssystems (10) durchführt.

20. Verfahren nach einem der Ansprüche 14 bis 19, **dadurch gekennzeichnet, dass** das Steuergerät (16) eine Kupplung (26) des Fahrzeugs (12) steuert.

21. Verfahren nach einem der Ansprüche 14 bis 20, **dadurch gekennzeichnet, dass** das Steuergerät (16) ein Differential (28) des Fahrzeugs (12) steuert.

22. Verfahren nach einem der Ansprüche 14 bis 21, **dadurch gekennzeichnet, dass** eine Stromversorgung des Feststellbremssystems (10) bei einem Stromausfall über einen Akku (30) erfolgt.

23. Verfahren nach Anspruch 22, **dadurch gekennzeichnet, dass** eine Stromversorgung zumindest eines der folgenden Systeme bei einem Stromausfall über den Akku (30) erfolgt:
- Getriebe (14)
- Kupplung (26)
- Differential (28)

24. Verfahren nach einem der Ansprüche 14 bis 23, **dadurch gekennzeichnet, dass** das Betätigen des Feststellbremssystems (10) das Betätigen des Getriebes (14) für die Dauer der Betätigung des Feststellbremssystems (10) unterbindet, wenn eine Motordrehzahldifferenz vor und nach dem Betätigen des Getriebes (14) größer als eine vorgebbare Schwellendifferenz ist.

25. Verfahren nach einem der Ansprüche 14 bis 24, **dadurch gekennzeichnet, dass** das Betätigen des Feststellbremssystems (10) ein Öffnen der Fahrzeugk Kupplung (26) für die Dauer der Betätigung des Feststellbremssystems (10) nur ermöglicht, wenn eine Motordrehzahl eines Antriebsmotors (36) unterhalb eines Schwellenwertes liegt.

26. Verfahren nach einem der Ansprüche 14 bis 25, **dadurch gekennzeichnet, dass** das Betätigen des Feststellbremssystems (10) während eines Regelzyklus eines ESP-Systems oder ABS-Systems unterbrochen wird.

27. Verfahren nach einem der Ansprüche 14 bis 26, **dadurch gekennzeichnet, dass** das Feststellbremssystem (10) bei einer Hilfsbremsunterstützung automatisch bei einer Entlüftung öffnet.

## Claims

1. Parking brake system (10) for a vehicle (12), which is integrated, at least in parts, into a gearbox (14) of said vehicle (12) and which comprises a controller unit (16), **characterised in that** the parking brake system (10) includes a manual control unit (20) comprising a connection (32) for an EBS system (34).

2. Parking brake system (10) according to Claim 1, **characterised in that** said controller unit (16) is coupled to a trailer controller module (18).

3. Parking brake system (10) according to Claim 1 or 2, **characterised in that** said controller unit (16) is suitable for controlling said gearbox (14) of said vehicle (12).

4. Parking brake system (10) according to any of the preceding Claims, **characterised in that** said manual control unit (20) is suitable to transmit a driver's request for gradable operation of the parking brake system (10) to said controller unit (16).

5. Parking brake system (10) according to Claim 4, **characterised in that** said manual control unit (20) is combined with a gearbox preselection generator (22).

6. Parking brake system (10) according to Claim 4 or 5, **characterised in that** the driver's request for a gradable operation of the parking brake system (10) is detectable by said manual control unit (20) via an actuation interval.

7. Parking brake system (10) according to any of the Claims 4 to 6, **characterised in that** the driver's request for operation of the parking brake system (10) is detectable by said manual control unit (20) via an actuation distance.

8. Parking brake system (10) according to any of the preceding Claims, **characterised in that** the parking brake system (10) is suitable for passing on a signal detected by said manual control unit (20) to an EBS controller unit (24).

9. Parking brake system (10) according to any of the preceding Claims, **characterised in that** said controller unit (16) is suitable for providing a testing function for the parking brake system (10).

10. Parking brake system (10) according to any of the preceding Claims, **characterised in that** said controller unit (16) is suitable for controlling a clutch (26) of said vehicle (12).

11. Parking brake system (10) according to any of the preceding Claims, **characterised in that** said controller unit (16) is suitable for controlling a differential (28) of said vehicle (12).

12. Parking brake system (10) according to any of the preceding Claims, **characterised in that** the parking brake system (10) comprises an accumulator battery (30) for the power supply in the event of power failure.

13. Vehicle (12) comprising a parking brake system (10) according to any of the preceding Claims.

14. Method of operating a brake system for a vehicle (12), comprising a parking brake system (10) and an EBS system (34), with said parking brake system (120) being integrated, at least in parts, into a gearbox (14) and comprises a controller unit (16), **characterised in**
- **that** a driver's request detected by a manual control unit (20) appertaining to the parking brake system is passed on to an EBSD controller unit (24) of said EBS system (34), and
- **that** said EBS system (34) assists in response the parking brake system (10) with additional braking effect by applying a service brake in order to achieve a sufficient auxiliary brake effect.

15. Method according to Claim 14, **characterised in that** said controller unit (16) controls a trailer control module (18).

16. Method according to Claim 14 or 15, **characterised in that** said controller unit (16) controls the gearbox (14) of said vehicle (12).

17. Method according to any of the Claims 14 to 16, **characterised in that** a driver's request for gradable operation of the parking brake system (10) is detected via an actuation interval of said manual control unit (20).

18. Method according to any of the Claims 14 to 17, **characterised in that** a driver's request for gradable operation of the parking brake system (10) is detected via an actuation distance of said manual control unit (20).

19. Method according to any of the Claims 14 to 18, **characterised in that** said controller unit (16) executes a testing function of the parking brake system (10).

20. Method according to any of the Claims 14 to 19, **characterised in that** said controller unit (16) controls a clutch (26) of said vehicle (12).

21. Method according to any of the Claims 14 to 20, **characterised in that** said controller nit (16) controls a differential (28) of said vehicle (12).

22. Method according to any of the Claims 14 to 21, **characterised in that** the parking brake system (10) is supplied with power via an accumulator battery (30) in the event of power failure.

23. Method according to Claim 22, **characterised in that** at least one of the following systems is supplied with power via said accumulator battery 830) in the event of power failure:
- a gearbox (14)
- a clutch (26)
- a differential (28)

24. Method according to any of the Claims 14 to 23, **characterised in that** the operation of the parking brake system (10) prevents the operation of said gearbox (14) throughout the period of operation of the parking brake system (10) when a difference in the number of revolutions of the engine before and after operation of said gearbox (14) exceeds a predeterminable threshold difference.

25. Method according to any of the Claims 14 to 24, **characterised in that** the operation of the parking brake system (10) permits opening of the vehicle clutch (26) for the period of operation of the parking brake system (10) only when a number of engine revolutions of a driving engine (36) is lower than a threshold value.

26. Method according to any of the Claims 14 to 25, **characterised in that** the operation of the parking brake system is interrupted throughout a regulating cycle of an ESP system or ABS system.

27. Method according to any of the Claims 14 to 26, **characterised in that** the parking brake system (10) opens automatically in the event of ventilation with assisting auxiliary braking function.

## Revendications

1. Système (10) de frein de stationnement pour un véhicule (12), qui est intégré au moins en partie dans une boîte de vitesse (14) du véhicule (12) et qui comprend un appareil (16) de commande, **caractérisé en ce que** le système (10) de frein de stationnement comprend une unité (20) de commande manuelle, qui a une borne (32) pour un système (34) EBS;

2. Système (10) de frein de stationnement suivant la revendication 1, **caractérisé en ce que** l'appareil (16) de commande est couplé à un module (18) de commande de remorque.

3. Système (10) de frein de stationnement suivant la revendication 1 ou 2, **caractérisé en ce que** l'appareil (16) de commande est approprié pour commander la boîte de vitesse (14) du véhicule (12).

4. Système (10) de frein de stationnement suivant l'une des revendications précédentes, **caractérisé en ce que** l'unité (20) de commande manuelle est appropriée pour transmettre à l'appareil (16) de commande le souhait du conducteur d'un actionnement pouvant être gradué du système (10) de frein de stationnement.

5. Système (10) de frein de stationnement suivant la revendication 4, **caractérisé en ce que** l'unité (20) de commande manuelle est réunie à un transmetteur (22) de présélection de boîte de vitesse.

6. Système (10) de frein de stationnement suivant la revendication 4 ou 5, **caractérisé en ce que** le souhait du conducteur d'actionnement pouvant être gradué du système (10) de frein de stationnement peut être détecté par l'unité (20) de commande manuelle sur une durée d'actionnement.

7. Système (10) de frein de stationnement suivant l'une des revendications 4 à 6, **caractérisé en ce que** le souhait du conducteur d'actionnement du système (10) de frein de stationnement peut être détecté par l'unité (20) de commande manuelle sur une course d'actionnement.

8. Système (10) de frein de stationnement suivant l'une des revendications précédentes, **caractérisé en ce que** le système (10) de frein de stationnement est approprié pour acheminer vers un appareil (24) de commande EBS un signal détecté par l'unité (20) de commande manuelle.

9. Système (10) de frein de stationnement suivant l'une des revendications précédentes, **caractérisé en ce que** l'appareil (16) de commande est approprié pour mettre à disposition une fonction de test du système (10) de frein de stationnement.

10. Système (10) de frein de stationnement suivant l'une des revendications précédentes, **caractérisé en ce que** l'appareil (16) de commande est approprié pour commander un accouplement (26) du véhicule (12).

11. Système (10) de frein de stationnement suivant l'une des revendications précédentes, **caractérisé en ce que** l'appareil (16) de commande est approprié pour commander un différentiel (28) du véhicule (12).

12. Système (10) de frein de stationnement suivant l'une des revendications précédentes, **caractérisé en ce que** le système (10) de frein de stationnement comprend un accumulateur (30) d'alimentation en courant en cas de panne de courant.

13. Véhicule (12) ayant un système (10) de frein de stationnement suivant l'une des revendications précédentes.

14. Procédé pour faire fonctionner un système de frein d'un véhicule (12) comprenant un système (10) de frein de stationnement et un système (34) EBS, le système (10) de frein de stationnement étant intégré au moins en partie dans une boîte de vitesse (14) et comprenant un appareil (16) de commande, **caractérisé**
- **en ce qu'**un souhait du conducteur déterminé par une unité (20) de commande manuelle appartenant au système de frein de stationnement est acheminé à un appareil (24) de commande EBS du système (34) EBS, et
- **en ce que** le système (34) EBS assiste ensuite le système (10) de frein de stationnement avec un effet de freinage supplémentaire par le serrage d'un frein de service pour atteindre un effet de freinage auxiliaire suffisant.

15. Procédé suivant la revendication 14, **caractérisé en ce que** l'appareil (16) de commande commande un module (18) de commande de remorque.

16. Procédé suivant la revendication 14 ou 15, **caractérisé en ce que** l'appareil (16) de commande, commande la boîte de vitesse (14) du véhicule (12).

17. Procédé suivant l'une des revendications 14 à 16, **caractérisé en ce que** le souhait du conducteur d'un actionnement pouvant être gradué du système (10) de frein de stationnement est détecté sur une durée d'actionnement de l'unité (20) de commande manuelle.

18. Procédé suivant l'une des revendications 14 à 17, **caractérisé en ce que** le souhait du conducteur d'actionnement gradué du système (10) de frein de stationnement est détecté sur une course d'actionnement de l'unité (20) de commande manuelle.

19. Procédé suivant l'une des revendications 14 à 18, **caractérisé en ce que** l'appareil (16) de commande effectue une fonction de test du système (10) de frein de stationnement.

20. Procédé suivant l'une des revendications 14 à 19, **caractérisé en ce que** l'appareil (16) de commande commande un accouplement (26) du véhicule (12).

21. Procédé suivant l'une des revendications 14 à 20, **caractérisé en ce que** l'appareil (16) de commande commande un différentiel (28) du véhicule (12).

22. Procédé suivant l'une des revendications 14 à 21, **caractérisé en ce qu'**une alimentation en courant du système (10) de frein de stationnement s'effectue par un accumulateur (30) en cas de panne de courant.

23. Procédé suivant la revendication 22, **caractérisé en ce qu'**une alimentation en courant d'au moins l'un des systèmes suivants s'effectué par l'accumulateur (30) dans le cas d'une panne de courant :
- boîte de vitesse (14),
- accouplement (26),
- différentiel (28).

24. Procédé suivant l'une des revendications 14 à 23, **caractérisé en ce que** l'actionnement du système (10) de frein de stationnement supprime l'actionnement de la boîte de vitesse (14) pour la durée de l'actionnement du système (10) de frein de stationnement, si une différence de régime du moteur avant et après l'actionnement de la boîte de vitesse (14) est plus grande qu'une différence de seuil pouvant être prescrite.

25. Procédé suivant l'une des revendications 14 à 24, **caractérisé en ce que** l'actionnement du système (10) de frein de stationnement ne permet une ouverture de l'accouplement (26) de véhicule pendant la durée de l'actionnement du système (10) de frein de stationnement que si un régime d'un moteur (36) de traction est inférieur à une valeur de seuil.

26. Procédé suivant l'une des revendications 14 à 25, **caractérisé en ce que** l'actionnement du système (10) de frein de stationnement est interrompu pendant un cycle de réglage d'un système ESP ou d'un système ABS.

27. Procédé suivant l'une des revendications 14 à 26, **caractérisé en ce que** le système (10) de frein de stationnement, lors d'une assistance de frein auxiliaire, s'ouvre automatiquement lors d'une mise à l'atmosphère.
